# EUROPEAN PATENT SPECIFICATION

(11) **EP 4 394 439 B1**
(45) Date of publication and mention of the grant of the patent: **23.09.2026**
(21) Application number: 23220247.3
(22) Date of filing: 27.12.2023
(51) Int. Cl.: G01S 7/4863, G01S 7/481, G01S 17/10, G01S 7/4865, G01S 17/42, G01S 17/931

(54) **LASER DETECTOR AND LIDAR**
LASERDETEKTOR UND LIDAR
DÉTECTEUR LASER ET LIDAR

(30) Priority: 29.12.2022 CN 202211703207
(43) Date of publication of application: 03.07.2024
(73) Proprietor: Suteng Innovation Technology Co., Ltd, Shenzhen City Guangdong 518000 (CN)
(72) Inventor: LUO, Jie, Shenzhen City (CN); CHEN, Huazhou, Shenzhen City (CN); JIANG, Shen, Shenzhen City (CN)
(74) Representative: Ran, Handong

(56) References cited:
- US-A1- 2020 057 146
- US-A1- 2021 156 975
- US-A1- 2021 165 079

## Description

### TECHNICAL FIELD

The present application relates to the field of LiDAR, and in particular, to a laser detector and LiDAR.

### BACKGROUND

With complex and variable actual vehicle driving environments, to implement high-level autonomous driving functions, higher requirements are imposed on sensing and detection capabilities of vehicle-mounted LiDAR, including, but not limited to, a greater detection range, no blind region in short-distance ranging, and distinguishability of reflectivity of objects at different distances. Currently, a TOF (Time of Fight) technical solution is generally used for the LiDAR. A pulse laser beam is emitted in a target direction, and a reflected laser beam from the object is received by a detector. Time of fight of a laser beam pulse between the LiDAR and the target and intensity and a shape of a reflected echo are measured, information indicating whether there is an object in the target direction, a distance from the object to the LiDAR, and reflectivity of an object surface can be obtained.

A laser detector is a core device in the TOF solution, and determines detection efficiency, detection resolution and a dynamic detection range in a photoelectric conversion process. There is still room for improvement of existing laser detectors.
US 2021156975 A1 discloses a receiving arrangement for receiving light signals with a light receiver for receiving light signals and for converting the light signals into electrical signals; and an evaluation circuit, which determines a distance between the receiving arrangement and an object depending on the electrical signals and a start signal for an emission of the light signals, wherein the light receiver has a first group of light-receiving elements which have a higher sensitivity for the reception of light signals than a further group of light-receiving elements, wherein the first and the further group are ready to receive at different points in time.
US20200057146A1 discloses a light receiver (22) having a plurality of avalanche photodiode elements (24) that can each be biased above a breakdown voltage by a bias voltage and can thus be operated in a Geiger mode, wherein the avalanche photodiode elements (24) form a plurality of groups, and having a control unit (30) to change the sensitivity of the avalanche photodiode elements (24) of a respective group. US20210165079A1 discloses an assembly and a method for ascertaining the distance to at least one object. The light signals are converted into first electric signals by a first group of light-receiving elements, and the light signals are additionally converted into second electrical signals by a second group of light-receiving elements.

### SUMMARY

The invention is set out in the appended set of claims.

### BRIEF DESCRIPTION OF THE DRAWINGS

FIG. 1 is a schematic diagram of an embodiment of a laser detector according to this application;
FIG. 2 is a schematic structural diagram of an SiPM;
FIG. 3 is a schematic structural diagram of a SPAD;
FIG. 4 is a schematic diagram of an arrangement of different blocks in a laser detector according to this application;
FIG. 5 is a schematic diagram of an arrangement of different blocks in a laser detector according to this application;
FIG. 6 to FIG. 9 are schematic diagrams of different arrangements of different blocks in laser detectors according to this application;
FIG. 10 is a schematic diagram of an embodiment of a laser detector according to this application; and
FIG. 11 is a schematic diagram of an embodiment of LiDAR according to an embodiment of this application.

### DESCRIPTION OF THE EMBODIMENTS

The following describes embodiments of the present application more specifically with reference to the accompanying drawings. Although the embodiments of the present application are shown in the accompanying drawings, it should be understood that the present application can be implemented in various forms and should not be limited by the embodiments illustrated herein. On the contrary, the embodiments are provided for a more thorough and complete understanding of the present application and delivery of the complete scope of the present application to a person skilled in the art.

The terms used in the embodiments of the present application are merely for the purpose of illustrating specific embodiments, but are not intended to limit the present application. The singular forms of "a", "the" and "this" as used in the present application and the appended claims are also intended to include plural forms, unless the context clearly indicates otherwise. It should be further understood that the term "and/or" used in this specification refers to any combination of one or more of the associated items listed and all possible combinations thereof.

It should be understood that although the terms "first", "second", "third", and the like are used to describe various types of information in the present application, the information should not be limited to these terms. The terms are only used to distinguish between information of the same type. For example, without departing from the scope of the present application, first information can also be referred to as second information, and similarly, second information can also be referred to as first information. Therefore, a feature with a determiner such as "first" or "second" can expressly or implicitly include one or more features. In the description of the present application, "a plurality of" means two or more, unless otherwise specifically defined.

A LiDAR is a system that emits a laser beam to detect characteristics such as a position and a speed of a target. One working principle of the LiDAR is to emit a laser beam to the target detection region, and then calculate a time difference between a received reflected echo beam and the emitted laser beam, and the time difference is a time of flight of the laser beam. Based on the time of flight, the LiDAR calculates parameters such as a distance and azimuth of the object reflecting the echo beam, to detect an external environment. The LiDAR generally includes a transceiving module and a processing module. A laser emitter in the transceiving module converts an electrical pulse into an optical pulse for emission, and then a laser detector reversely converts an optical pulse reflected from the target into an electrical pulse signal, and the processing module calculates relevant information based on the electrical pulse signal. Optionally, the LiDAR can also include a scanning module (for example, a MEMS galvanometer, a rotating mirror, and a mechanical rotary platform) for changing an emission direction of the emitted laser beam, so that the laser beam scans within a specific field of view. In an example in which optical paths of an echo laser beam and an outgoing laser beam are coaxial, the echo laser beam returns via the same path from a scanning module to the transceiving module and is received by a laser detector in the transceiving module.

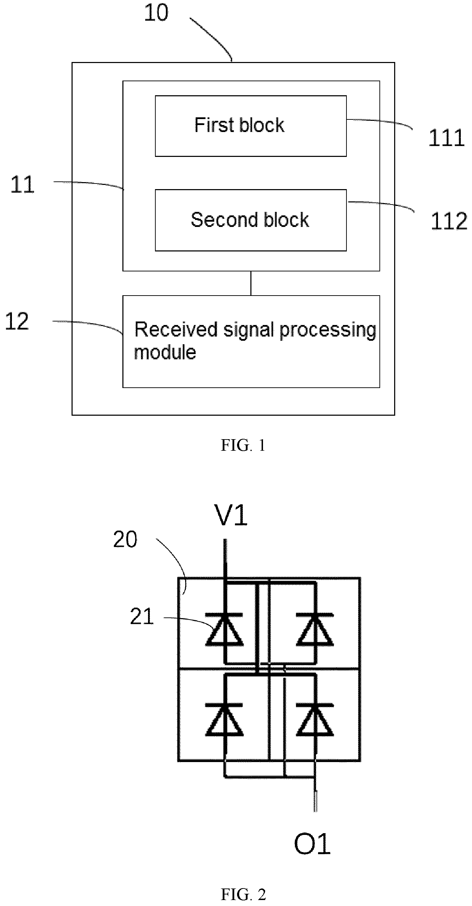

As shown in FIG. 1, FIG. 1 is a schematic diagram of an embodiment of a laser detector according to this application. A laser detector 10 includes multiple optical detection units 11 and a signal processing module 12.

The multiple optical detection units include at least two blocks (a first block 111 and a second block 112), and each block includes at least one optical detection unit. A first bias voltage is input into each optical detection unit in the first block 111, and a second bias voltage different from the first bias voltage is input into each optical detection unit in the second block 112. The signal processing module 12 is configured to process a received incident optical signal detected by the first block 111 and the second block 112 and provide an output signal.

In an example, the optical detection unit may include a single-photon avalanche diode (SPAD) array. A single-point SPAD works in Geiger mode and has large gains. Once triggered by a single photon, the single-point SPAD generates a large current signal. Therefore, the single-point SPAD has high photoelectric conversion efficiency, can detect excitation of the single photon, and is suitable for measurement of weak light, for example, detection of an echo from a long distance or in a case of low reflectivity.

In an example, the block can be implemented by receiving different bias voltages input by a silicon photomultiplier (SiPM) block. As shown in FIG. 2, FIG. 2 is a schematic structural diagram of an SiPM. For a SiPM 20, multiple single-point SPAD micro-units 21 are connected in parallel under input of the same bias voltage V1 to generate an output O1. The output O1 is a combined signal triggered by multiple SPADs, and indicates a relationship between the number of SPADs triggered on a SiPM phase and time, and therefore, the SiPM is also referred to as an MPPC (Multi-Pixel Photon Counter). The output of the SiPM directly reflects optical intensity information of a detected optical signal. In the blocks in the multiple optical detection units, one block can be implemented via the SiPM, and different blocks can be implemented by receiving different bias voltages input by different SiPMs, or different blocks in the multiple optical detection units can be respectively implemented by dividing the SiPM into different blocks. Optionally, methods of applying a bias voltage to the SiPM can be applying the bias voltage through the cathode and the anode.

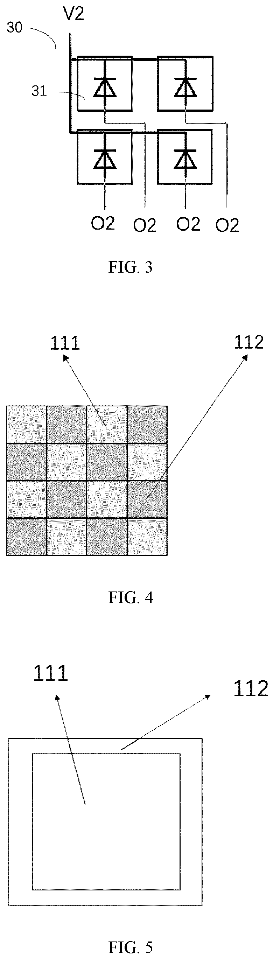

In an example, the block can be implemented via block combination of an output of the current SPAD array. As shown in FIG. 3, FIG. 3 is a schematic structural diagram of a SPAD array. A SPAD array 30 is an array formed by single-point SPADs 31. Under the same input of a bias voltage V2, each single-point SPAD has an independent output O2 and can only be triggered in response to a single photon. The output of the current SPAD array can be divided into at least two blocks, and outputs of different blocks are respectively combined to implement the SiPM respectively and serve as different blocks in the multiple optical detection units, or all the outputs of the SPAD array are combined to implement the SiPM and serve as one block in the multiple optical detection units.

The SiPM has high photoelectric conversion efficiency and single-photon gains, but a dynamic receiving range is also reduced. The number of SPADs in the SiPM determines the maximum number of photons that can be triggered, that is, the dynamic receiving range. The number of SPADs in the SiPM usually does not exceed 4000, and the dynamic range does not exceed 80 dB. To ensure a ranging capability for an object at a long distance or with low reflectivity, the 80 dB dynamic range is used to cover 80 dB of the weak light in a 160 dB dynamic range of reflected light. This means that in many cases where the reflected light is strong, SiPM enters a saturated state.

When the SiPM enters the saturated state, a series of problems are caused. Firstly, ranging performance is reduced. Once the SiPM is saturated, a detection capability is lost and the detection capability is gradually recovered within saturation recovery time. This means that when being irradiated by strong light, the SiPM experiences a sudden drop and a recovery process of the detection capability. Especially, for a LiDAR architecture with a coaxial optical path, because a stray light path cannot be avoided, there is leading reflected light. If the leading reflected light causes the SiPM to enter the saturation state, a blind region is caused for short-distance ranging. Secondly, reflectivity cannot be distinguished. If reflected light with different intensities can saturate the SiPM, it is difficult to distinguish the reflected light with the two intensities from the perspective of the intensities. The shorter the distance, the wider the range of indistinguishable reflectivity.

To prevent the SiPM from entering the saturated state during the short-distance ranging, an additional emission with small energy is usually introduced in addition to an emission with the maximum power. A smaller number of emitted photons mean a smaller number of reflected echo photons, which can prevent the SiPM from entering the saturation state. This enables the SiPM to also have a detection capability for the short distance. However, because of the additional emission with the small energy, energy is consumed and time is wasted, thereby making a design of a transceiving sequence more complex and also making a design of a laser emission circuit more complex and expensive.

In the embodiments of this application, the multiple optical detection units are arranged in the laser detector, and the multiple optical detection units are arranged into at least two blocks with different input bias voltages. The block providing a higher bias voltage has higher photoelectric conversion efficiency and greater gains, and is suitable for measurement of weak light, for example, an echo from a longer distance or an echo in a case of lower reflectivity. The block providing a lower bias voltage has lower photoelectric conversion efficiency and smaller gains, and is suitable for measurement of strong light, for example, an echo from a shorter distance or an echo in a case of higher reflectivity. In this way, through the arrangement of the at least two blocks with different bias voltages, different detection efficiencies can be ensured and a greater dynamic detection range can be implemented. This also means that with the same laser emission power, the laser detector in this application can have a direct detection capability of a longer detection range at nighttime and greater approximation to a signal-to-noise ratio of light at daytime. In addition, the intensity of strong light can be better identified and distinguished, to better distinguish the reflectivity, especially, the reflectivity at the short distance. In addition, there is no need to introduce the emission with small energy in traditional short-distance ranging solutions, which can reduce energy consumption in single-point ranging, simplify the design of the transceiving sequence, and simplify the design of the laser emission circuit.

In an example, a bias voltage of at least one block in the laser detector is low enough to cause the block to degrade to work in the linear mode. Gains in the linear mode are in the order of 10 to 100, and therefore, excitation of thousands of photons is required to generate an electrical signal that can be detected by a subsequent circuit. The linear mode is suitable for detecting an echo from a short distance or an echo in a case of a high reflectivity.

Three or more bias voltage levels can be set in the laser detector. Specific values of high and low bias voltages and selection of the number of levels depend on a system design requirement for receiving sensitivity and the dynamic range. Different numbers and types of block combinations can be established as required to implement different combination effects of dynamic ranges and resolution. More levels can cover a larger dynamic receiving range, thereby facilitating characteristic identification and processing of signals within the larger dynamic range by the rear end. Dynamic ranges of the levels are different. Different levels cover different dynamic ranges. There may be a specific link portion between the dynamic ranges of the different levels. The design of each level can be determined according to a post-processing requirement of the system.

In an example, the laser detector is further provided with a third bias voltage different from the first bias voltage and the second bias voltage, and includes a third block that inputs the third bias voltage. In an example, the first bias voltage is greater than the second bias voltage and the second bias voltage is greater than the third bias voltage. A saturation threshold of the first block to which the first bias voltage is input is lower than a saturation threshold of the second block to which the second bias voltage is input. That is, the second block still has a detection capability when the first block enters the saturated state. Likewise, the third block still has a detection capability when the second block enters the saturated state. Numbers of optical detection units in different blocks may be the same or different, and distribution densities may be the same or different. Optionally, the number of optical detection units in the first block is greater than the number of optical detection units in the second block. Optionally, the distribution density of the optical detection units in the first block is greater than the distribution density of the optical detection units in the second block. Optionally, the number of first blocks is greater than the number of second blocks.

There are various arrangements of different blocks within the laser detector. For example, in multiple optical detection units, the blocks are alternately arranged, and input bias voltages of two adjacent blocks are different. As shown in FIG. 4, FIG. 4 is a schematic diagram of an arrangement of different blocks in a laser detector according to this application. The multiple first blocks 111 and the multiple second blocks 112 are alternately arranged in rows and columns, and are generally evenly spaced, so that the blocks with two bias voltages are evenly distributed on a light receiving surface of the laser detector. It can be understood that this application imposes no limitation on a spacing ratio of the first block to the second block. Alternatively, the laser detector is provided with three blocks with different bias voltages, and the multiple first blocks, second blocks, and third blocks are alternately arranged in rows and columns to be generally evenly distributed on the light receiving surface.

As shown in FIG. 5, FIG. 5 is a schematic diagram of an arrangement of different blocks in a laser detector according to this application. The second bias voltage is lower than the first bias voltage, and the optical detection units in the second block 112 are arranged around the first block 111. Such a distribution solution integrates with the characteristic of optical imaging.

For most LiDAR, receiving sensors are generally placed at image points at infinite distances in the optical paths. For an echo from an object at a short distance, a point of focus is deviated, resulting in a larger light spot and greater crosstalk of the echo from the object in the near field. In the optical path, there are the following 2 causes of crosstalk: 1. in a case of multi-channel transceiving, a main lobe of an imaging light spot falls on a receiver of a current channel, and a side lobe of the imaging light spot falls on a receiver of another channel due to a diffraction limit, thereby causing crosstalk to another channel; and 2. the structure has a scattering effect on the echo light. In general, for the object with the low reflectivity, this part of echo light is very weak, and therefore, has small impact on the crosstalk. However, for the object with the high reflectivity, the echo is strong, and the echo at the edge of the light spot on the receiver can also be greater than the threshold, and therefore, is detected, thereby causing enormous crosstalk.

In this way, the block with a low bias voltage that can detect strong light is arranged on a periphery of the block with a high bias voltage that can detect weak light, and therefore, detection of weak light reflected by the object at the long distance or with the low reflectivity is not affected, and the block with the low bias voltage is basically not affected by ambient optical noise in the imaging light spot. In addition, in a scenario of the echo from the short distance that is likely to cause saturated strong light and a scenario of crosstalk of echo light in a case of high reflectivity, the block with the low bias voltage on the periphery can receive a strong echo light signal under impact of the enlargement of the light spot and a side lobe of diffraction, which implements lower sensitivity and detection in the greater dynamic range, thereby compensating for a shortcoming of saturation of the block with the high bias voltage.

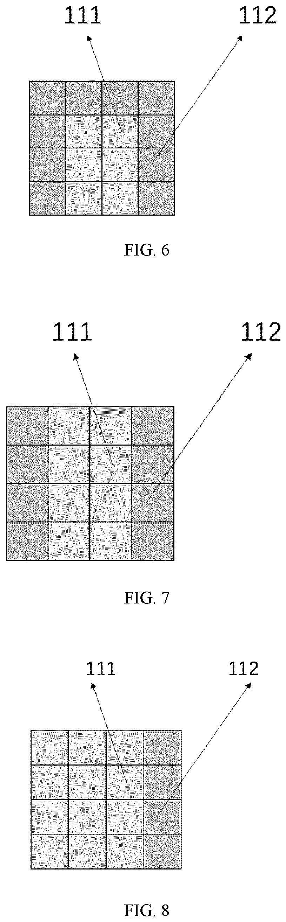

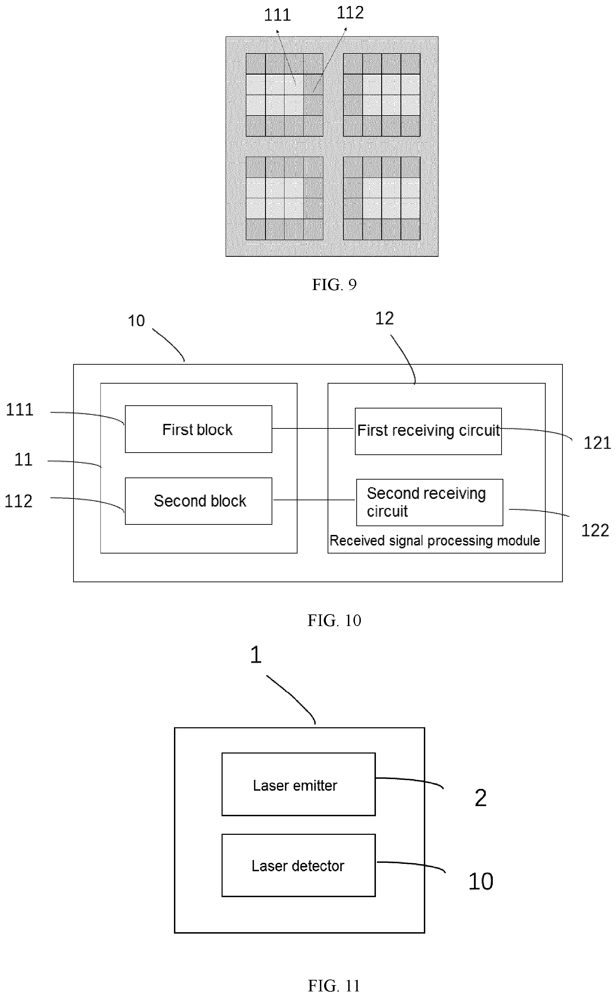

To simplify an actual manufacturing process, different blocks can be established by increasing the blocks with the low bias voltage on different sides. For example, as shown in FIG. 6 to FIG. 9, FIG. 6 to FIG. 9 are schematic diagrams of different arrangements of different blocks in laser detectors according to this application. In FIG. 6, the second bias voltage is lower than the first bias voltage, and the optical detection units in the multiple second blocks 112 are respectively arranged on left, upper and right sides of the multiple first blocks 111. In FIG. 7, the second bias voltage is lower than the first bias voltage, and the optical detection units in the multiple second blocks 112 are respectively arranged on the left and right sides of the multiple first blocks 111. In FIG. 8, the second bias voltage is lower than the first bias voltage, and the optical detection units in the multiple second blocks 112 are respectively arranged on one side (the right side is used as an example in the figure) of the multiple first blocks 111. As shown in FIG. 9, the multiple SiPMs can be implemented on the same planar array to form a planar array of SiPMs. Arrangement of different blocks in any SiPM can be the same as that shown in any one of FIG. 6 to FIG. 8, or the same as the planar array of SiPMs including four SiPMs shown in FIG. 9. The second bias voltage is lower than the first bias voltage. In the two SiPMs on the left side, the optical detection units in the multiple second blocks 112 are respectively arranged on the upper, right and bottom sides of the multiple first blocks 111. In the two SiPMs on the right side, the optical detection units in the multiple second blocks 112 are respectively arranged on the left, upper, and bottom sides of the multiple first blocks 111. The planar array of SiPMs can be formed by SiPMs with the same or different structures, or even a new cross-SiPM block can be established. The planar array of SiPMs can be directly configured into blocks without first establishing separate SiPM subunits. When an SiPM block is designed on the planar array, the outputs of the blocks may be combined both inside of the SiPM subunit and across subunits. The planar array formed by SiPMs with different structures can be designed to meet specific needs of the system to achieve optimal performance.

In the multiple optical detection units of the laser detector, the blocks output signals to the signal processing module in various output methods. The output methods in which the blocks output signals to the signal processing module are described below by using examples. Arrangements of various blocks in the laser detector can be combined with the following output methods respectively.

In an example, as shown in FIG. 10, FIG. 10 is a schematic diagram of an embodiment of a laser detector according to this application. An input of the optical detection unit in the first block 111 is the first bias voltage, and the outputs are combined into the first detection signal for outputting. An input of the optical detection unit in the second block 112 is the second bias voltage, and the outputs are combined into the second detection signal for outputting. The signal processing module 12 includes a first receiving circuit 121 for processing the first detection signal and a second receiving circuit 122 for processing the second detection signal. Optionally, the first bias voltage is higher than the second bias voltage, and when the first block outputs a saturated echo signal, the signal processing module 12 obtains information of an echo signal using the second detection signal output by the second block by excluding the saturated echo signal output by the first block. Alternatively, the signal processing module 12 obtains information of an echo signal using the second detection signal output by the second block and a rising edge and/or saturation width of the saturated echo signal output by the first block. Rising edge moment information and the saturation width of the saturated echo signal can be used to calculate reception time of the echo signal and reflectivity. However, the saturated signal with high resolution and in the low dynamic range loses a lot of waveform information, and it is difficult to extract identification features of abnormal waveforms, for example, echoes with crosstalk.

Optionally, the multiple optical detection units include multiple first blocks and multiple second blocks. All outputs of all the first blocks with the input of the first bias voltage are combined into the first detection signal for outputting, or all outputs of some first blocks with the input of the first bias voltage are combined into the first detection signal for outputting, and outputs of other first blocks with the input of the first bias voltage are combined into other detection signal for outputting. The same rule is appliable to the output of the second block.

For example, in the different blocks of the laser detector shown in FIG. 4, all outputs of the first block 111 are combined into one detection signal for outputting, or outputs of some first blocks 111 are combined into one detection signal for outputting, and outputs of the other first blocks 111 are combined into another detection signal for outputting.

In an example, an output of at least one optical detection unit in the first block and an output of at least one optical detection unit in the second block are combined into a third detection signal for outputting; and the signal processing module includes a third receiving circuit for processing the third detection signal. Outputs of the blocks with different bias voltages can be combined with different weight to be output, to obtain a signal with both high resolution in the low dynamic range and low resolution in the high dynamic range. On the one hand, the number of outputs can be reduced and a design of a receiving and processing interface at a rear end is simplified. On the other hand, flexibility of the design is enhanced, which facilitates an extraction design of receiving features at different positions and with different intensities to fit the system.

For the blocks whose outputs are combined into one detection signal, outputs of two or more blocks at different bias voltages can be included. For example, outputs of at least one optical detection unit in at least one third block are combined into a third detection signal, and an output of at least one optical detection unit in the first block and an output of at least one optical detection units in the second block are jointly combined into a third detection signal for outputting. Alternatively, outputs of the optical detection units in the third block are combined into a fourth detection signal for outputting; and the signal processing module includes a fourth receiving circuit for processing the fourth detection signal.

For example, different blocks in the laser detector shown in FIG. 4 are divided into at least two regions, and each region includes at least one first block and at least one second block. Outputs of blocks in each region are combined into the same detection signal for outputting, and outputs of different blocks in different regions are used as different detection signals for outputting.

In an example, the first block or the second block includes at least two sub-blocks, outputs of different sub-blocks are combined into different detection signals for outputting, and outputs of optical detection units in the same sub-block are combined into the same detection signal for outputting. Different sub-blocks in the same block can output signals independently, which can indicate intensity of echo light in different regions in the block, and can provide a region-related echo characteristic analysis for the rear end.

For example, optical detection units in a first block 111 in the laser detector shown in FIG. 5 are divided into at least two sub-blocks, and each sub-block includes at least one optical detection unit. For example, the first block 111 is divided in half into upper and lower sub-blocks, outputs of all optical detection units in each sub-block are combined into one detection signal for outputting, and outputs of different sub-blocks are used as different detection signals for outputting.

In a case where the SiPM is included in the multiple optical detection units, a signal reading method of the SiPM can be reading from a higher side or a lower side. Reading a signal from a side of the SiPM closer to the GND is referred to as low-side reading. Reading a signal from a side of the SiPM that is farther away from the GND is referred to as high-side reading.

In the foregoing examples, when the outputs are combined into one detection signal for outputting, outputs of the blocks with to-be-combined outputs or some blocks can be directly combined into an excited current via a parallel connection, or after the pulse voltage is excited for the optical detection units with to-be-combined outputs, the outputs are combined through a logic combination circuit or an analog superposition method. For example, after the excited current of the optical detection unit is converted into a pulse signal, conditional screening and combination is performed via the AND-OR gate circuit, or the pulse signal is further subjected to analog circuit addition to be combined.

An embodiment of this application further provides LiDAR. As shown in FIG. 11, FIG. 11 is a schematic diagram of an embodiment of LiDAR according to an embodiment of this application. The LiDAR 1 includes a laser emitter 2 for emitting a laser beam, and the foregoing laser detector 10. It can be understood that, as an optional embodiment, the LiDAR may also include a scanning member, where the scanning member may be, for example, a galvanometer, a rotating mirror, or a mechanical rotary platform. This application imposes no limitation on whether the LiDAR includes the scanning member.

## Claims

1. A laser detector, comprising multiple optical detection units and a signal processing module, wherein the multiple optical detection units (11) are divided into at least a first block (111) and a second block (112), a first bias voltage is input into each optical detection unit (11) in the first block (111), a second bias voltage is input into each optical detection unit (11) in the second block (112), and the first bias voltage is different from the second bias voltage; and
the signal processing module (12) is configured to process received incident optical signals detected by the first block (111) and the second block and provide output signals,
**characterized in that**,
a resolution of the first block (111) is greater than a resolution of the second block (112), and an input bias voltage of at least one block in the multiple optical detection units (11) has a value, so that the at least one block works in a linear mode;
outputs of the optical detection unit in the first block (111) are combined into a first detection signal for outputting; and outputs of the optical detection unit in the second block (112) are combined to output a second detection signal;
the signal processing module (12) comprises a first receiving circuit for processing the first detection signal and a second receiving circuit for processing the second detection signal; and
the first bias voltage is higher than the second bias voltage, and when the first block (111) outputs a saturated echo signal, the signal processing module (12) is configured to obtain information of an echo signal using the second detection signal output by the second block (112) and a rising edge and/or saturation width of the saturated echo signal output by the first block (111).

2. The laser detector according to claim 1, wherein an output of at least one optical detection unit in the first block and an output of at least one optical detection unit in the second block are combined into a third detection signal for outputting; and the signal processing module comprises a third receiving circuit for processing the third detection signal.

3. The laser detector according to claim 1, wherein the multiple optical detection units are further divided into a third block, a third bias voltage is input into each optical detection unit in the third block, and the third bias voltage is different from the first bias voltage and the second bias voltage;
outputs of optical detection units in the third block are combined into a fourth detection signal for outputting; and
the signal processing module comprises a fourth receiving circuit for processing the fourth detection signal.

4. The laser detector according to claim 1, wherein the first block or the second block comprises at least two sub-blocks, outputs of different sub-blocks are used as different detection signals for outputting, and outputs of optical detection units in a same sub-block are combined into a same detection signal for outputting.

5. The laser detector according to claim 1, wherein the optical detection units in a same block are connected in parallel to combine outputs into a detection signal and output the detection signal to a receiving circuit;
the optical detection units in the same block are configured to convert their respective excited currents into pulse signals, combine the pulse signals into a detection signal via a logic combination circuit and output the detection signal to the receiving circuit; or
the optical detection units in the same block are configured to convert their respective excited currents into pulse signals, combine the pulse signals into a detection signal via analog circuit addition and output the detection signal to the receiving circuit.

6. The laser detector according to claim 1, wherein the multiple optical detection units are divided into multiple blocks, and input bias voltages of two adjacent blocks are different.

7. The laser detector according to claim 1, wherein the second bias voltage is lower than the first bias voltage, and the optical detection units in the second block are arranged around the first block.

8. The laser detector according to claim 1, wherein the second block and the first block are arranged side by side; or
the second bias voltage is lower than the first bias voltage, the laser detector comprises at least two second blocks, and the at least two second blocks are respectively arranged on different sides of the first block.

9. The laser detector according to claim 1, wherein the multiple optical detection units comprise an SiPM and a SPAD array.

10. A LiDAR, comprising:
a laser emitter for emitting a laser beam and the laser detector according to any one of claims 1 to 9.

## Patentansprüche

1. Laserdetektor, umfassend mehrere optische Detektionseinheiten und ein Signalverarbeitungsmodul, wobei
die mehreren optischen Detektionseinheiten (11) in mindestens einen ersten Block (111) und einen zweiten Block (112) unterteilt sind, eine erste Vorspannung an jede optische Detektionseinheit (11) in dem ersten Block (111) angelegt wird, eine zweite Vorspannung an jede optische Detektionseinheit (11) in dem zweiten Block (112) angelegt wird und die erste Vorspannung von der zweiten Vorspannung verschieden ist; und
das Signalverarbeitungsmodul (12) dazu ausgebildet ist, empfangene, von dem ersten Block (111) und dem zweiten Block detektierte einfallende optische Signale zu verarbeiten und Ausgangssignale bereitzustellen,
**dadurch gekennzeichnet, dass**
eine Auflösung des ersten Blocks (111) größer ist als eine Auflösung des zweiten Blocks (112) und eine Eingangsvorspannung mindestens eines Blocks in den mehreren optischen Detektionseinheiten (11) einen Wert aufweist, sodass der mindestens eine Block in einem Linearmodus arbeitet;
Ausgänge der optischen Detektionseinheit in dem ersten Block (111) zu einem ersten Detektionssignal zur Ausgabe kombiniert werden; und Ausgänge der optischen Detektionseinheit in dem zweiten Block (112) kombiniert werden, um ein zweites Detektionssignal auszugeben;
das Signalverarbeitungsmodul (12) eine erste Empfangsschaltung zum Verarbeiten des ersten Detektionssignals und eine zweite Empfangsschaltung zum Verarbeiten des zweiten Detektionssignals umfasst; und
die erste Vorspannung höher ist als die zweite Vorspannung und, wenn der erste Block (111) ein gesättigtes Echosignal ausgibt, das Signalverarbeitungsmodul (12) dazu ausgebildet ist, eine Information über ein Echosignal unter Verwendung des von dem zweiten Block (112) ausgegebenen zweiten Detektionssignals und einer ansteigenden Flanke und/oder Sättigungsbreite des von dem ersten Block (111) ausgegebenen gesättigten Echosignals zu erhalten.

2. Laserdetektor nach Anspruch 1, wobei ein Ausgang mindestens einer optischen Detektionseinheit in dem ersten Block und ein Ausgang mindestens einer optischen Detektionseinheit in dem zweiten Block zu einem dritten Detektionssignal zur Ausgabe kombiniert werden; und das Signalverarbeitungsmodul eine dritte Empfangsschaltung zum Verarbeiten des dritten Detektionssignals umfasst.

3. Laserdetektor nach Anspruch 1, wobei die mehreren optischen Detektionseinheiten ferner in einen dritten Block unterteilt sind, eine dritte Vorspannung an jede optische Detektionseinheit in dem dritten Block angelegt wird und die dritte Vorspannung von der ersten Vorspannung und der zweiten Vorspannung verschieden ist;
Ausgänge optischer Detektionseinheiten in dem dritten Block zu einem vierten Detektionssignal zur Ausgabe kombiniert werden; und
das Signalverarbeitungsmodul eine vierte Empfangsschaltung zum Verarbeiten des vierten Detektionssignals umfasst.

4. Laserdetektor nach Anspruch 1, wobei der erste Block oder der zweite Block mindestens zwei Unterblöcke umfasst, Ausgänge verschiedener Unterblöcke als verschiedene Detektionssignale zur Ausgabe verwendet werden und Ausgänge optischer Detektionseinheiten in einem selben Unterblock zu einem selben Detektionssignal zur Ausgabe kombiniert werden.

5. Laserdetektor nach Anspruch 1, wobei die optischen Detektionseinheiten in einem selben Block parallel geschaltet sind, um Ausgänge zu einem Detektionssignal zu kombinieren und das Detektionssignal an eine Empfangsschaltung auszugeben;
die optischen Detektionseinheiten in demselben Block dazu ausgebildet sind, ihre jeweiligen angeregten Ströme in Pulssignale umzuwandeln, die Pulssignale über eine logische Kombinationsschaltung zu einem Detektionssignal zu kombinieren und das Detektionssignal an die Empfangsschaltung auszugeben; oder
die optischen Detektionseinheiten in demselben Block dazu ausgebildet sind, ihre jeweiligen angeregten Ströme in Pulssignale umzuwandeln, die Pulssignale über eine analoge Schaltungsaddition zu einem Detektionssignal zu kombinieren und das Detektionssignal an die Empfangsschaltung auszugeben.

6. Laserdetektor nach Anspruch 1, wobei die mehreren optischen Detektionseinheiten in mehrere Blöcke unterteilt sind und Eingangsvorspannungen zweier benachbarter Blöcke verschieden sind.

7. Laserdetektor nach Anspruch 1, wobei die zweite Vorspannung niedriger ist als die erste Vorspannung und die optischen Detektionseinheiten in dem zweiten Block um den ersten Block herum angeordnet sind.

8. Laserdetektor nach Anspruch 1, wobei der zweite Block und der erste Block nebeneinander angeordnet sind; oder
die zweite Vorspannung niedriger ist als die erste Vorspannung, der Laserdetektor mindestens zwei zweite Blöcke umfasst und die mindestens zwei zweiten Blöcke jeweils auf verschiedenen Seiten des ersten Blocks angeordnet sind.

9. Laserdetektor nach Anspruch 1, wobei die mehreren optischen Detektionseinheiten ein SiPM und ein SPAD-Array umfassen.

10. LiDAR, umfassend:
einen Laseremitter zum Aussenden eines Laserstrahls und den Laserdetektor nach einem der Ansprüche 1 bis 9.

## Revendications

1. Détecteur laser, comprenant une pluralité d'unités de détection optique et un module de traitement de signal, dans lequel
la pluralité d'unités de détection optique (11) est divisée en au moins un premier bloc (111) et un deuxième bloc (112), une première tension de polarisation est appliquée en entrée de chaque unité de détection optique (11) du premier bloc (111), une deuxième tension de polarisation est appliquée en entrée de chaque unité de détection optique (11) du deuxième bloc (112) et la première tension de polarisation est différente de la deuxième tension de polarisation ; et
le module de traitement de signal (12) est configuré pour traiter des signaux optiques incidents reçus, détectés par le premier bloc (111) et le deuxième bloc, et pour fournir des signaux de sortie,
**caractérisé en ce que**
une résolution du premier bloc (111) est supérieure à une résolution du deuxième bloc (112) et une tension de polarisation d'entrée d'au moins un bloc parmi la pluralité d'unités de détection optique (11) a une valeur, de sorte que ledit au moins un bloc fonctionne en mode linéaire ;
des sorties de l'unité de détection optique du premier bloc (111) sont combinées en un premier signal de détection destiné à être délivré ; et des sorties de l'unité de détection optique du deuxième bloc (112) sont combinées pour délivrer un deuxième signal de détection ;
le module de traitement de signal (12) comprend un premier circuit de réception pour traiter le premier signal de détection et un deuxième circuit de réception pour traiter le deuxième signal de détection ; et
la première tension de polarisation est supérieure à la deuxième tension de polarisation et, lorsque le premier bloc (111) délivre un signal d'écho saturé, le module de traitement de signal (12) est configuré pour obtenir une information d'un signal d'écho en utilisant le deuxième signal de détection délivré par le deuxième bloc (112) et un front montant et/ou une largeur de saturation du signal d'écho saturé délivré par le premier bloc (111).

2. Détecteur laser selon la revendication 1, dans lequel une sortie d'au moins une unité de détection optique du premier bloc et une sortie d'au moins une unité de détection optique du deuxième bloc sont combinées en un troisième signal de détection destiné à être délivré ; et le module de traitement de signal comprend un troisième circuit de réception pour traiter le troisième signal de détection.

3. Détecteur laser selon la revendication 1, dans lequel la pluralité d'unités de détection optique est en outre divisée en un troisième bloc, une troisième tension de polarisation est appliquée en entrée de chaque unité de détection optique du troisième bloc et la troisième tension de polarisation est différente de la première tension de polarisation et de la deuxième tension de polarisation ;
des sorties d'unités de détection optique du troisième bloc sont combinées en un quatrième signal de détection destiné à être délivré ; et
le module de traitement de signal comprend un quatrième circuit de réception pour traiter le quatrième signal de détection.

4. Détecteur laser selon la revendication 1, dans lequel le premier bloc ou le deuxième bloc comprend au moins deux sous-blocs, des sorties de différents sous-blocs sont utilisées comme différents signaux de détection destinés à être délivrés et des sorties d'unités de détection optique d'un même sous-bloc sont combinées en un même signal de détection destiné à être délivré.

5. Détecteur laser selon la revendication 1, dans lequel les unités de détection optique d'un même bloc sont connectées en parallèle pour combiner des sorties en un signal de détection et pour délivrer le signal de détection à un circuit de réception ;
les unités de détection optique du même bloc sont configurées pour convertir leurs courants excités respectifs en signaux d'impulsion, pour combiner les signaux d'impulsion en un signal de détection via un circuit de combinaison logique et pour délivrer le signal de détection au circuit de réception ; ou
les unités de détection optique du même bloc sont configurées pour convertir leurs courants excités respectifs en signaux d'impulsion, pour combiner les signaux d'impulsion en un signal de détection via une addition par circuit analogique et pour délivrer le signal de détection au circuit de réception.

6. Détecteur laser selon la revendication 1, dans lequel la pluralité d'unités de détection optique est divisée en plusieurs blocs et des tensions de polarisation d'entrée de deux blocs adjacents sont différentes.

7. Détecteur laser selon la revendication 1, dans lequel la deuxième tension de polarisation est inférieure à la première tension de polarisation et les unités de détection optique du deuxième bloc sont disposées autour du premier bloc.

8. Détecteur laser selon la revendication 1, dans lequel le deuxième bloc et le premier bloc sont disposés côte à côte ; ou
la deuxième tension de polarisation est inférieure à la première tension de polarisation, le détecteur laser comprend au moins deux deuxièmes blocs et lesdits au moins deux deuxièmes blocs sont respectivement disposés sur différents côtés du premier bloc.

9. Détecteur laser selon la revendication 1, dans lequel la pluralité d'unités de détection optique comprend un SiPM et une matrice SPAD.

10. LiDAR, comprenant :
un émetteur laser pour émettre un faisceau laser et le détecteur laser selon l'une quelconque des revendications 1 à 9.
